Europäisches Patentamt

(19) European Patent Office

Office européen des brevets

(11) Publication number: **0 321 062 B1**

(12) **EUROPEAN PATENT SPECIFICATION**

(45) Date of publication of patent specification : 28.08.91 Bulletin 91/35

(51) Int. Cl.⁵ : **E06B 3/96**

(21) Application number : **88202919.2**

(22) Date of filing : **15.12.88**

(54) Wood connection.

(30) Priority : **18.12.87 NL 8703076**

(43) Date of publication of application :
**21.06.89 Bulletin 89/25**

(45) Publication of the grant of the patent :
**28.08.91 Bulletin 91/35**

(84) Designated Contracting States :
**AT BE CH DE ES FR GB GR IT LI LU NL SE**

(56) References cited :
**EP-A- 0 052 082
DE-B- 3 532 814
GB-A- 640 717
NL-C- 102 286
NL-C- 147 506**

(73) Proprietor : **De Jong, Pieter
Bovenberg 63
NL-2861 BA Bergambacht (NL)**

(72) Inventor : **De Jong, Pieter
Bovenberg 63
NL-2861 BA Bergambacht (NL)**

(74) Representative : **Baarslag, Aldert D. et al
Nederlandsch Octrooibureau
Scheveningseweg 82 P.O. Box 29720
NL-2502 LS 's-Gravenhage (NL)**

EP 0 321 062 B1

Jouve, 18, rue Saint-Denis, 75001 PARIS

## Description

The invention is concerned with a wood connection comprising at least two wooden members glued together, having in the fixed position aligned bores to receive dowel pins and at least one distance piece fitted between the wooden members, said distance piece covering a limited part of the boundary face between the members to be connected and wherein along the circumference of the distance piece and between the members to be connected, a permanently tough elastic layer of glue is applied.

A wood connection of this type is known from the Dutch patent specification 102.286. According to this publication distance pieces are fitted between two members to be connected. These distance pieces are slightly smaller than the boundary face of the members to be connected, so that after having fitted said distance pieces a relatively shallow circumferential groove remains. This groove is filled with elastic cement after having fitted the distance pieces. According to this publication problems arising from rotting and wear and tear of the connection should be eliminated. However it appeared that this is incorrect. Due to weather influences and seasonal changes and influences related to the use of the connection, the wood will crimp and expand. Very large stresses result from this in the wood connection. With the type of wood connection according to the Dutch patent publication, a fixed spacing between the members to be connected is provided, resulting in the above referred drawbacks of the state of art, which doubtless leads to cracks within one or more of the glued surfaces between the disadvantages and the wooden member.

The present invention aims to eliminate this drawback.

In the wood connection described above, this aim is solved according to the invention in that the part of the boundary face between the members to be connected, and defined by the layer of glue, is appreciably larger than the part of the boundary face which is defined by the distance piece.

Since now the greater part of the boundary face is filled with a tough-elastic layer of glue, a dilatation seam is formed. The dimension of the distance piece is so small, that it cannot influence the crimping and expanding motions of the members to be connected, in contrast to the state of art method. Thanks to this the crimping and expanding motions at the connection can now be absorbed and no cracking of the glued connection will take place, eliminating the problem of rotting. According to the invention a totally new perception is concived, teaching that it is incorrect to design the structure so stiff that the stresses acting in it could be taken, but that it has sense to create a structure so flexible that small changes of shape have no detremental influences at all on it.

According to a preferred embodiment the distance pieces are made from wood or a wood-glue-accepting material. Consequently the distance pieces can be applied in the layer of the glue and they can contribute to the strength of the connection. This is of importance especially in case the wood connection according to the invention is applied to well known structures, from which the glue-surface is calculated without taking into account the presence of the distance pieces according to the invention in the layer of glue.

To further reduce the effect of the strength reduction due to application of the distance pieces, these distance pieces can take the shape of discs provided with at least one opening.

According to another preferred embodiment the distance piece is made in the form of a ring-shaped disc surrounding the dowel pin. According to another embodiment of the wood connection, there is provided a appreciable clearance between the dowel pin and the hole in the finished position of the connection, to be filled with the glue applied. This results in that on one or more places no more a direct resting of the dowel pin against the wall of the bore occurs. By filling this clearance with glue there is also looked after a tough-elastic connection on this place.

According to another preferred embodiment the nominal outside diameter of the dowel pin is considerably smaller than the bore of the hole to receive glue in between. When making a dowel-hile connection always the difficulty is experienced that either the bore has to be made with a predetermined depth or the dowel pin has to be introduced into the hole to a predetermined depth. To solve this problem and at the same time to provide for a distance piece, the dowel pin can incorporate a shoulder, which shoulder at the one hand functions as distance piece and at the other hand as stop for the dowel pin. In doing so the depth of the corresponding bore is no more critical and the application of the dowel pin has become very simple.

According to a further preferred embodiment the distance piece is shaped as a cam, extending along the circumference of at least one of the members to be connected. This cam can be integral with the member to be connected and made by machining. At least one of the boundary faces of the members to be connected can furthermore be provided with a groove shaped vide. In doing so a sufficient volume is created to contain superfluous glue in order to form an extra buffer to cope with changes of shape resulting from the warping of wood and without detremental effects to the water tightness of the connection.

Below, the invention will be explained in greater detail referring to the examples of embodiments shown in the attached drawings

Figure 1 illustrates a exploded wood connection,
Figure 2 illustrates the connection according to figure 1 in cross section of a finished connection,

Figure 3 illustrates another embodiment of a distance piece,

Figure 4 illustrates a dowel pin combined with a distance piece,

Figure 5 illustrates a dowel pin in which radially extending circumferential grooves are introduced,

Figure 6 illustrates a dowel pin with longitudinal extending grooves and

Figure 7 illustrates a further preferred embodiment of a connection according to the invention incorporating a distance piece.

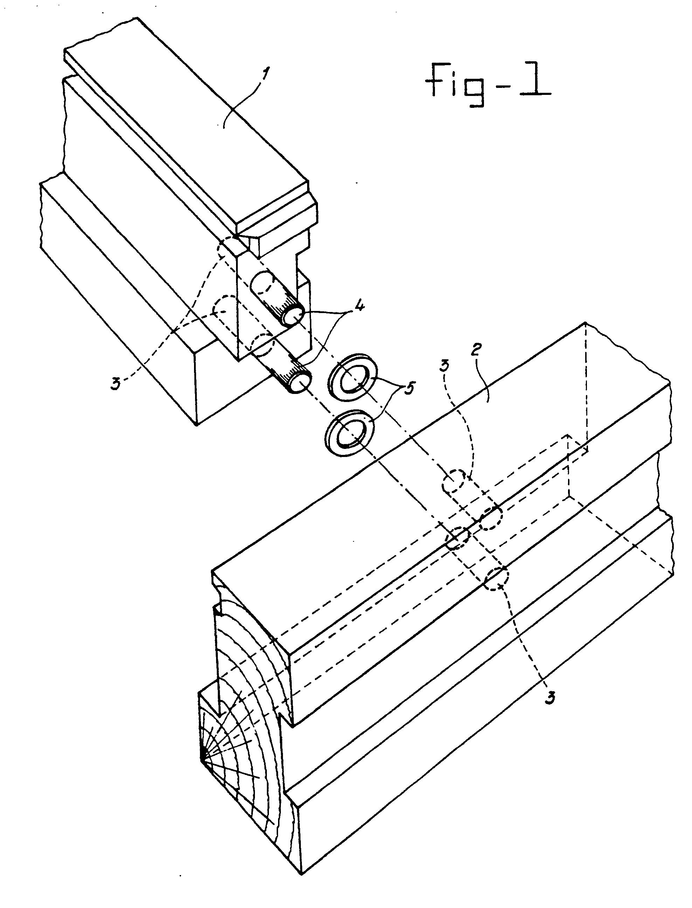

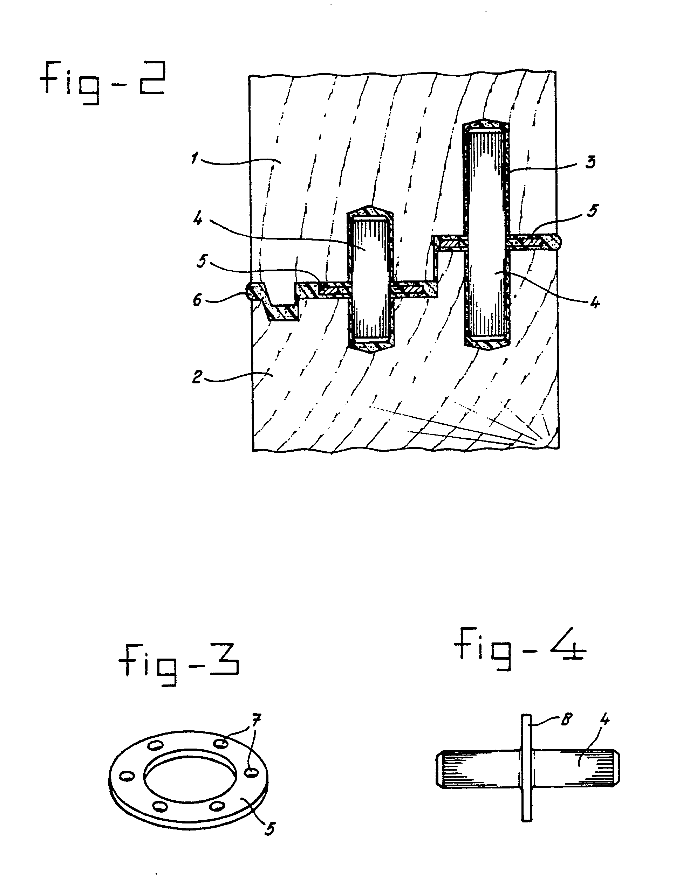

In figure 1 a wood connection is illustrated of a type which for instance can be applied in housefront-timber work. It is made up of wooden members 1 and 2 which should be connected. To provide for said connection in both members 1, 2 there are incorporated bores 3 to receive dowel pins 4. Around these dowel pins 4 ring-shaped discs 5 can be placed of which the inner diameter is appreciably larger than the outside diameter of the dowel pins 4. The ring-shaped discs are preferably made of wood, wood-like materials or wood-glue accepting fibers and plastics. For assembling of the members illustrated in figure 1, glue is applied. The glue is also applied in the bores 3, before the dowel pins 4 are introduced. For this purpose the diameter of the dowel pins 4 is appreciably smaller then the bore of the holes 3 to retain glue between them, as figure 2 illustrates. From figure 2 it can further be derived that, thanks to the distance pieces, the layer of glue 6 has a important thickness. This is in absolute contrast to the glued connection according to general practice, in which as thin layer as possible is applied. In contrast to the state of art, the type of glue used here according to the invention, is of a type which, after curing, stays permanently tough-elastic, so that some movement (expansion) between the members 1, 2 becomes possible, without the danger arising that the connection will be broken due to overloading the layer of glue, or due to breaking of the adjacent wood, as is a well known phenomenon. In this way changes of the dimensions due to the influence of temperature and humidity can be taken. As type of glue, for instance polyurethan of epoxy-based glues can be used, forming a tough-elastic connection with a considerable breaking strength under tension. From figure 2 it follows that between the ring discs 5 and the dowel pins 4, a spacing is left in which glue is present to have the surface area to be glued near the dowel pin as large as possible. To increase further this glue-surface area, the ring discs, according to figure 3, can be provided with openings 7. To solve the problems which may arise with regard to the correct position of the dowel pins in the bores, which may be solved by drilling the holes deliberately to a predetermined depth, it is more simple to provide the dowel pin 4 with a shoulder 8, as illustrated in figure 4, which at the same time serves as distance piece. Thanks to this design, the depth of the bores in the members 1 and 2 is no more critical.

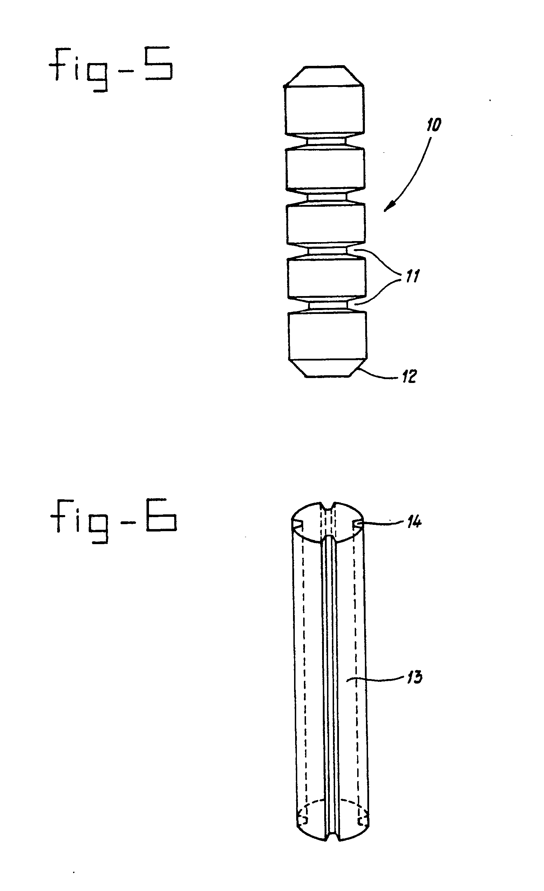

Said shoulder 8 can be provided with (not illustrated) openings like the embodiment according to figure 3. In figure 5 a further embodiments of the dowel pin is illustrated, which pin here has got reference 10. This dowel has radial grooves 11, which may extend along the whole circumference or over only a part of it. As an example, the base of the groove 11 can have a width of 2 mm and opens at the circumference to a width of 4 mm. Furthermore the dowel pin 10 can be chamfered at the ends 12. Thanks to this design the dowel pin 10 can more snugly be introduced in the corresponding hole. The grooves 11 and the spaces formed by the chamfer 12 provide volumes to take glue to support the tough-elastic-glue connection. Apart from the above the outside diameter of the dowel pin 10 still can be of appreciably smaller size than the corresponding bore.

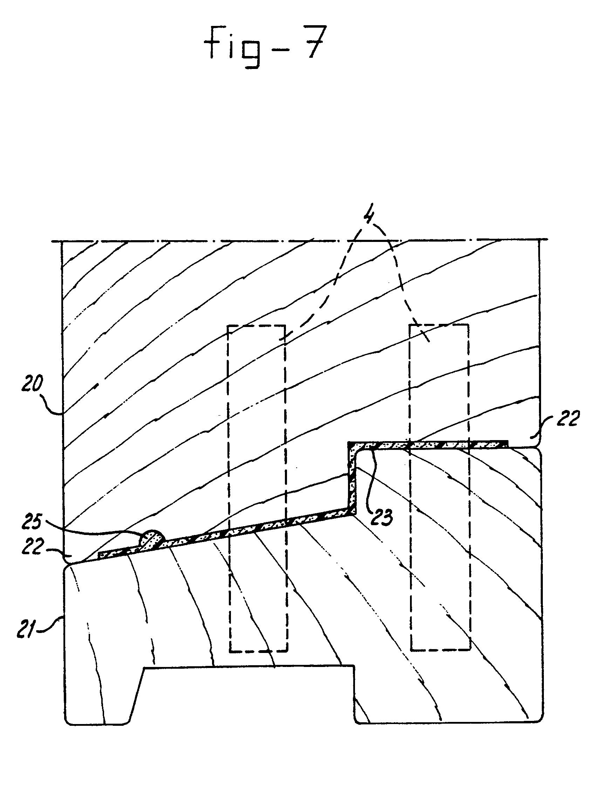

In figure 6 another dowel 13 is illustrated. It has longitudinal extending grooves 14. These grooves for instance can have the same shape at the grooves 11, illustrated in figure 5. Of course it is possible to provide the dowel pins with many different types of cavities. Furthermore the receiving bore can also be filled with glue, provisionally in combination with the illustrated embodiments of the dowel pins with non-smooth surface. In figure 7 another embodiment of the distance piece is illustrated. Member 20 of both members 20 and 21 to be connected to each other, is provided with cams 22. Between them and between the members 20 and 21 a space is defined, which may have a thickness of 1 à 2 mm, for taking up glue 23. The dowel connection serves the well known purpose accordirng to general practice and is for said reason only schematically shown. In member 20 there is furthermore provided an extending groove 25, which serves to collect superfluous glue and which forms an extra buffer volume to deal with possible changes of dimensions and shape of the wood.

Although the invention has been described above relating to preferred embodiments, it should be understood that for the person skilled in the art many can be introduced without leaving the scope of the present invention. For instance, the distance pieces can be shaped differently from ring-discs.

## Claims

1. Wood connection comprising at least two wooden members (1, 2) which are stuck together with glue (6), provided with bores (3) which in the fixed position of the connection are aligned, for receiving dowel pins (4, 10, 13) and at least one distance piece (5, 8, 22) fitted between the wood members, said distance piece extending over a limited part of the boundary face of the members (1, 2) to be connected and in which along the circumference of the distance piece and between the members to be connected, a permanently tough-elastic layer of glue is applied, characterized in that the part of the boundary face of the members (1, 2) to be connected, defined by the layer of glue (6), is considerably larger than the part of the boundary face defined by the distance piece (5, 8, 22).

2. Wood connection according to claim 1, in which the distance piece (5, 8, 22) is made of wood-like materials, or woods-glue accepting fibers and plastics.

3. Wood connection according to one or more of the preceding claims, in which the distance piece (5) contains a disc provided with at least one opening (7).

4. Wood connection according to one or more of the preceding claims, in which the distance piece (5) contains a ring-shaped disc which surrounds the dowel pin (10, 13).

5. Wood connection according to claim 4, in which the internal diameter of the ring-shaped disc is appreciably larger than the outside diameter of the dowel pin (10, 13).

6. Wood connection according to one ore more of the preceding claims, in which the nominal outside diameter of the dowel pin (4, 10, 13) is appreciably smaller than the bore of the hole (3), in order to retain glue in between.

7. Wood connection according to claim 6, in which the dowel pin (10, 13) is provided with recesses (11, 14) at its circumferential surface.

8. Wood connection according to one of the claims 4-7, in which the dowel pin (4) is provided with a shoulder (18) acting as distance piece.

9. Wood connection according to one or more of the preceding claims, in which the distance piece (22) is cam-shaped, which cam extends along the circumference of at least one of the members to be connected.

10. Wood connection according to claim 9, in which the cam (22) forms one integral part with the member to be connected.

11. Wood connection according to one or more of the preceding claims, in which at least one of the boundary faces of the members to be connected is provided with a groove-shaped recess (25).

12. Wood connection according to one or more of the preceding claims, in which the glue is of a tough-elastic type, based on polyurethan or epoxy, with or without reinforcing fibers.

## Patentansprüche

1. Holzverbindung mit zumindest zwei Holzelementen (1, 2), die mit Leim (6) zusammengefügt sind und Bohrungen (3), die in der fixierten Stellung der Verbindung ausgerichtet sind zum Aufnehmen von Paßstiften (4, 10, 13), aufweisen und mit zumindest einem zwischen den Holzelementen eingepaßten Abstandsstück (5, 8, 22), das sich über einen begrenzten Teil der Grenzfläche der zu verbindenden Elemente (1, 2) erstreckt, wobei längs des Umfangs des Abstandsstücks und zwischen den zu verbindenden Elementen eine dauerhaft zäh-elastische Leimschicht aufgebracht ist, dadurch gekennzeichnet, daß der Teil der Grenzfläche der zu verbindenden Elemente (1, 2), der durch die Leimschicht (6) definiert wird, erheblich größer ist als der Teil der Grenzfläche, der durch das Abstandsstück (5 ; 8, 22) definiert wird.

2. Holzverbindung nach Anspruch 1, bei der das Abstandsstück (5, 8, 22) aus holzartigen Materialien oder aus Holzleim annehmenden Fasern und Kunststoff hergestellt ist.

3. Holzverbindung nach einem oder mehreren der vorhergehenden Ansprüche, bei der das Abstandsstück (5) eine Scheibe enthält, die mit mindestens einer Öffnung (7) versehen ist.

4. Holzverbindung nach einem oder mehreren der vorhergehenden Ansprüche, bei der das Abstandsstück (5) eine ringförmige Scheibe enthält, die den Paßstift (10, 13) umgibt.

5. Holzverbindung nach Anspruch 4, bei der der innere Durchmesser der ringförsegen Scheibe erheblich größer ist als der äußere Durchmesser des Paßstiftes (10, 13).

6. Holzverbindung nach einem oder mehreren der vorhergehenden Ansprüche, bei der der nominale äußere Durchmesser des Paßstiftes (4, 10, 13) erheblich kleiner ist als die Bohrung des Loches (3), damit Leim dazwischen zurückgehalten wird.

7. Holzverbindung nach Anspruch 6, bei der der Paßstift (10, 13) Aussparungen (11, 14) an seiner Umfangsoberfläche aufweist.

8. Holzverbindung nach einem der Ansprüche 4 bis 7, bei der der Paßstift (4) mit einer als Abstandsstück dienenden Schulter (8) versehen ist.

9. Holzverbindung nach einem oder mehreren der vorhergehenden Ansprüche, bei das Abstandsstück (22) als Ansatz ausgebildet ist, der sich längs des Umfangs zumindest eines der zu verbindenden Elemente erstreckt.

10. Holzverbindung nach Anspruch 9, bei der der Ansatz (22) einen integralen Bestandteil des zu verbindenden Elements bildet.

11. Holzverbindung nach einem oder mehreren der vorhergehenden Ansprüche, bei der zumindest eine der Grenzflächen der zu verbindenden Elemente set einer rillenförmigen Aussparung (25) versehen ist.

12. Holzverbindung nach einem oder mehreren der vorhergehenden Ansprüche, bei der der Leim von zäh-elastischem Typ auf der Basis von Polyurethan oder Epoxid mit oder ohne verstärkenden Fasern ist.

## Revendications

1. Liaison entre pièces en bois, comportant au moins deux éléments en bois (1, 2) qui sont collés l'un à l'autre au moyen de colle (6), qui sont munis de trous (3), lesquels sont alignés dans la position fixée de la liaison, destinés à recevoir des chevilles (4, 10, 13), et au moins une pièce d'écartement (5, 8, 22) intercalée entre les éléments en bois, cette pièce d'écartement s'étendant sur une partie limitée de la surface de séparation entre les éléments (2) à relier l'un à l'autre, une couche de colle qui reste en permanence résistante et élastique étant appliquée le long de la circonférence de la pièce d'écartement et entre les éléments à relier, caractérisée en ce que la partie de la surface de séparation entre les éléments (1, 2) à relier l'un à l'autre définie par la couche de colle (6), est beaucoup plus grande que la partie de la surface de séparation définie par la pièce d'écartement (5, 8, 22).

2. Liaison entre pièces en bois conforme à la revendication 1, dans laquelle la pièce d'écartement (5, 8, 22) est réalisée en matériaux semblables à du bois, ou en fibres et matières plastiques acceptant la colle à bois.

3. Liaison entre pièces en bois conforme à au moins une des revendications précédentes, dans laquelle la pièce d'écartement (5) comprend un disque muni d'au moins une ouverture (7).

4. Liaison entre pièces en bois conforme à l'une au moins des revendications précédentes, dans laquelle la pièce d'écartement (5) comprend un disque de forme annulaire qui entoure la cheville (10, 13).

5. Liaison entre pièces en bois conforme à la revendication 4, dans laquelle le diamètre intérieur du disque de forme annulaire est sensiblement plus grand que le diamètre extérieur de la cheville (10, 13).

6. Liaison entre pièces en bois conforme à l'une au moins des revendications précédentes, dans laquelle le diamètre extérieur nominal de la cheville (4, 10, 13) est sensiblement plus petit que l'orifice du trou (3), de façon à retenir de la colle entre ce dernier et la cheville.

7. Liaison entre pièces en bois conforme à la revendication 6, dans laquelle la cheville (10, 13) est munie d'évidements (11, 14) sur sa surface périphérique.

8. Liaison entre pièces en bois conforme à l'une des revendications 4 à 7, dans laquelle la cheville (4) est munie d'un épaulement (8) agissant comme pièce d'écartement.

9. Liaison entre pièces en bois conforme à l'une au moins des revendications précédentes, dans laquelle la pièce d'écartement (20) est en forme d'épaulement, l'épaulement s'étendant le long de la circonférence de l'un au moins des éléments à relier l'un à l'autre.

10. Liaison entre pièces en bois conforme à la revendication 9, dans laquelle l'épaulement (22) constitue une partie intégrante de l'élément à relier.

11. Liaison entre pièces en bois conforme à l'une au moins des revendications précédentes, dans laquelle l'une au moins des surfaces de séparation des éléments à relier l'un à l'autre est munie d'un évidement (25) en forme de gorge.

12. Liaison entre pièces en bois conforme à l'une au moins des revendications précédentes, dans laquelle la colle est du type résistant et élastique, à base de polyuréthanne ou de résine époxy, avec ou sans fibres de renfort.

Fig-1

Fig-2

Fig-3

Fig-4

fig-5

10

11

12

fig-6

14

13

fig-7